# EUROPEAN PATENT SPECIFICATION

(11) **EP 1 973 635 B1**
(45) Date of publication and mention of the grant of the patent: **08.06.2011**
(21) Application number: 06847892.4
(22) Date of filing: 20.12.2006
(51) Int. Cl.: B01D 63/08

(54) **FILTRATION ASSEMBLY AND METHODS FOR MAKING AND USING SAME**
FILTRATIONSANORDNUNG UND VERFAHREN ZU IHRER HERSTELLUNG UND VERWENDUNG
ENSEMBLE DE FILTRATION ET PROCÉDÉS POUR LE FABRIQUER ET L'UTILISER

(30) Priority: 20.12.2005 US 752302 P
(43) Date of publication of application: 01.10.2008
(60) Divisional application: 10154351.0
(73) Proprietor: Tangenx Technology Corporation, Shrewsbury, MA 01545 (US)
(72) Inventor: CONNORS, John F. Jr., Shrewsbury, MA 01545 (US); PERREAULT, Mark A., Leominster, MA 01453 (US)
(74) Representative: Hirsch & Associés
(86) International application number: PCT/US2006/048740
(87) International publication number: WO 2007/075862

(56) References cited:
- DE-A1- 10 337 214
- GB-A- 1 437 443
- GB-A- 2 236 693
- JP-A- 2004 309 207
- US-A- 3 986 399
- US-A- 5 922 200
- US-A1- 2005 126 981

## Description

### Cross Reference To Related Application

This application is based upon and claims the benefit of priority from U.S. Provisional Application Serial No. 60/752,302 filed December 20, 2005,

### Field of the Invention

The invention generally relates to filtration devices and methods of making and using same.

### Background

Filtration is a process in which membranes are used to separate components in a fluid. Two types of filtration include tangential-flow filtration (TFF), also known as cross-flow filtration (CFF), and direct-flow filtration (DFF), also known as normal-flow filtration (NFF).

Tangential-flow or cross-flow filtration applications often use cassettes or other plate and frame formats. These plate and frame formats typically incorporate a plurality of flat sheet membranes arranged between external flat plates and manifolds. In tangential-flow or cross-flow filtration, the fluid to be filtered is passed through the inlet of the manifold, into the cassette, and tangentially to the first (or upstream) surface of the membranes. A portion of the fluid passes through each of the membranes frown the first surface to the second (or downstream) surface, through the cassette and out one outlet of the manifold. Another portion of the fluid passes tangentially to the first surface of the membrane, through the cassette and out another outlet of the manifold without passing through the membranes. The fluid passing into the inlet of the manifold and into the cassette is commonly referred to as the feed. The fluid passing from the first surface of the membrane to the second surface of the membrane is commonly referred to as the filtrate. The fluid passing parallel to the first surface of the membrane without passing through to the second surface of the membrane is commonly referred to as retentate.

Direct-flow or normal-flow filtration differs from cross-flow filtration in that the feed flow is generally directed toward and through the membrane, not tangentially across it. Particles that do not pass through the membrane accumulate within the membrane or at the membrane surface, while the filtrate passes through to the filtrate side.

Conventional cassette encapsulation is achieved by interleaving multiple layers of screen mesh and membrane in a stack to be bound together as a cohesive stack, typically with a urethane or silicone. The stack may be bound by retaining the layers between plates while impregnating and encapsulating the edges of the stacked layers with the urethane or silicone. The encapsulated stack is often termed a cassette.

Document US-A-5 922 200 is directed to a filtration apparatus formed from multilayer presealed elements and monolayer elements that are insert molded together. The device is provided with a feed port, and a filtrate port. The sealing configuration of the presealed elements and the seal provided by the insert molding step effect a seal configuration that causes a feed liquid to be filtered to form a filtrate such that the filtrate is not mixed with the feed.

### Summary Of The Invention

The invention relates to a filtration device having at least one filter packet and a retainer. The filter packet includes a membrane having a first side and a second side, and at least a first opening therethrough. The filter packet further includes a retentate screen in fluid communication with the first side of the membrane. The retentate screen includes a permeable material and a seal around an outer perimeter of the permeable material. The permeable material has at least a feed port-defining zone in fluid communication with the first opening. The filter packet further includes a filtrate screen in fluid communication with the second side of the membrane. The filtrate screen includes a permeable material and at least a feed port-defining zone in fluid communication with the first opening. The feed port-defining zone of the filtrate screen includes a seal around a perimeter thereof. The filtrate screen has a perimeter open to a filtrate collection area, into which filtrate can flow.

### Brief Description Of The Drawings

For the purpose of illustrating the invention, there are shown in the drawings forms which are presently preferred; it being understood, that this invention is not limited to the precise arrangements and instrumentalities shown.

FIG 1 shows front views of a retentate screen, a membrane and a filtrate screen according to certain embodiments of the present invention.

FIG 2 shows a perspective view of one embodiment of the present invention.

FIG 3 shows a retentate screen according to one embodiment of the present invention in front view, cross section viewed from side, and cross section viewed from bottom. As used herein, the term "bottom" means the bottom of the page, and should not be confused with the opposite of the front view, i.e., "back" view.

FIG 4 shows a membrane according to one embodiment of the present invention in front view, cross section viewed from side, and cross section viewed from bottom.

FIG 5 shows a filtrate screen according to one embodiment of the present invention in front view, cross section viewed from side, and cross section viewed from bottom.

FIG 6 shows a membrane in combination with a filtrate screen according to one embodiment of the present invention in front view, cross section viewed from side, and cross section viewed from bottom.

FIG 7 shows a membrane in combination with a filtrate screen and retentate screen according to one embodiment of the present invention in front view, cross section viewed from side, and cross section viewed from bottom.

FIG 8 shows perspective views of one embodiment of the present invention.

FIG 9 shows another embodiment of the present invention in front view, cross section viewed from side, and cross section viewed from bottom.

FIG 10 shows another embodiment of the invention in cross section.

FIG 11 shows two views of one embodiment of the invention.

FIG 12 shows one embodiment of the invention in cross section.

FIG 13 shows another cross sectional view of the embodiment in FIG 12.

FIG 14 shows another embodiment of the invention in cross section.

FIG 15 shows another embodiment of the invention in cross section.

FIG 16 shows a perspective drawing of one embodiment of the invention.

FIG 17 shows a perspective partial cut away drawing of the embodiment in FIG 16.

FIG 18 shows another perspective partial cut away drawing of the embodiment in FIG 16.

FIG 19 shows another perspective partial cut away drawing of the embodiment in FIG 16.

FIG 20 shows a schematic drawing of another embodiment of the invention.

FIG 21 shows another embodiment of the invention in cross section.

FIG 22 shows another cross sectional view of the embodiment of FIG 21.

### Detailed Description

In tangential flow filtration (TFF), a feed fluid is pumped tangentially along the surface of a membrane. An applied pressure serves to force a portion of the fluid through the membrane to the filtrate side. Anything that does not pass through the membrane, e.g., particulates, macromolecules, and the like, are retained on the retentate side. The retentate, however, does not remain on the surface of the membrane because of the tangential flow, which is in large part parallel to the surface of the membrane. The retentate stream may be discarded, it may be recycled back into the feed stream, it may be further filtered or treated, or it may be retained as useful in itself, as appropriate. The filtrate stream may be discarded, it may be further filtered or treated, or it may be retained as useful in itself, as appropriate.

Generally speaking, the feed stream and retentate remain on one side of the membrane, and the filtrate, having passed through the membrane, is on the other side of the membrane.

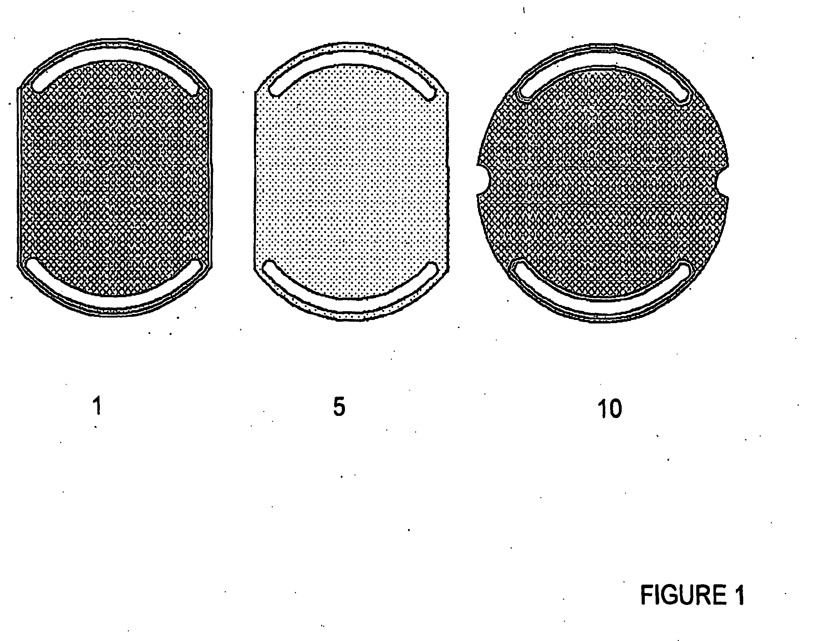

One embodiment of the present invention includes a retentate screen 1 and a filtrate screen 10, having a membrane 5 therebetween. Examples of these are shown in FIG 1. In one embodiment, the screens 1 and 10 and membrane 5 may be in the form of flat sheets, but other forms are possible. The retentate screen 1, membrane 5, and filtrate screen 10 may be assembled with the membrane 5 disposed between the retentate and filtrate screens 1 and 10 to form a filter packet 11.

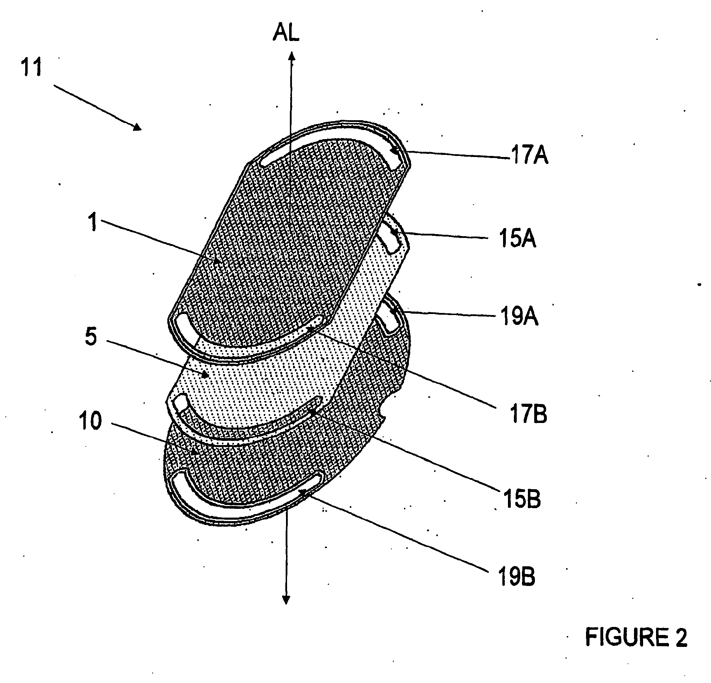

One example of a filter packet 11 is shown in FIG 2. A stackwise, axially aligned assembly of the filter packet 11 is shown in FIG 2, but other assemblies are possible. The axial line AL shown in FIG 2 is an imaginary line which runs through the centers of the screens 1 and 10 and the membrane 5 and is approximately normal to the planes of the screens 1 and 10 and membrane 5. In the filter packet 11, the retentate screen 1 is in fluid communication with a first side of membrane 5, and the filtrate screen is in fluid communication with a second side of membrane 5. As the term is used herein, two or more elements are in "fluid communication" when fluid can flow freely between them. In this embodiment, the retentate screen 1 and filtrate screen 10 are isolated from one another by membrane 5.

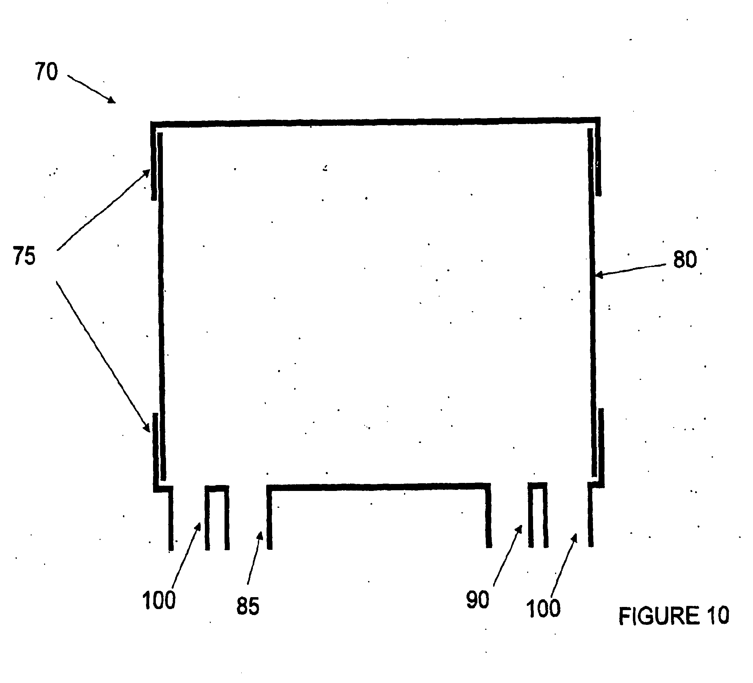

One embodiment of the invention includes carrying out tangential flow filtration using the filter packet 11. The filter packet 11 may be housed or otherwise retained by a retainer in the form of a pressure shell 70 having a shell wall 80, one example of which is shown in FIG 10.

In accordance with such an embodiment of the invention, a tangential flow filtration device includes the pressure shell 70 and at least one filter packet 11 inside the pressure shell 70. The filter packet 11 includes a membrane 5 having a first side and a second side, and first and second openings 15A, 15B therethrough.

The filter packet 11 further includes a retentate screen 1 in fluid communication with the first side of the membrane 5. The retentate screen 1 comprises a permeable material 20 and a seal 30 around an outer perimeter of the permeable material 20. The permeable material 20 includes a feed port-defining zone 17A in fluid communication with the first opening 15A of the membrane, and a retentate port-defining zone 17B in fluid communication with the second opening 15B.

The filter packet 11 further includes a filtrate screen 10 in fluid communication with the second side of the membrane 5. The filtrate screen 10 includes a permeable material 20 with a feed port-defining zone 19A in fluid communication with the first opening 15A, and a retentate port-defining zone 19B in fluid communication with the second opening 15B. Each of the feed port-defining and retentate port-defining zones 19A, 19B of the filtrate screen 10 includes a seal 30 around a perimeter thereof. Any portion of the filtrate screen 10 that is not part of the feed port-defining or retentate port-defining zones 19A, 19B can be in fluid communication with at least a portion of the interior of shell wall 80.

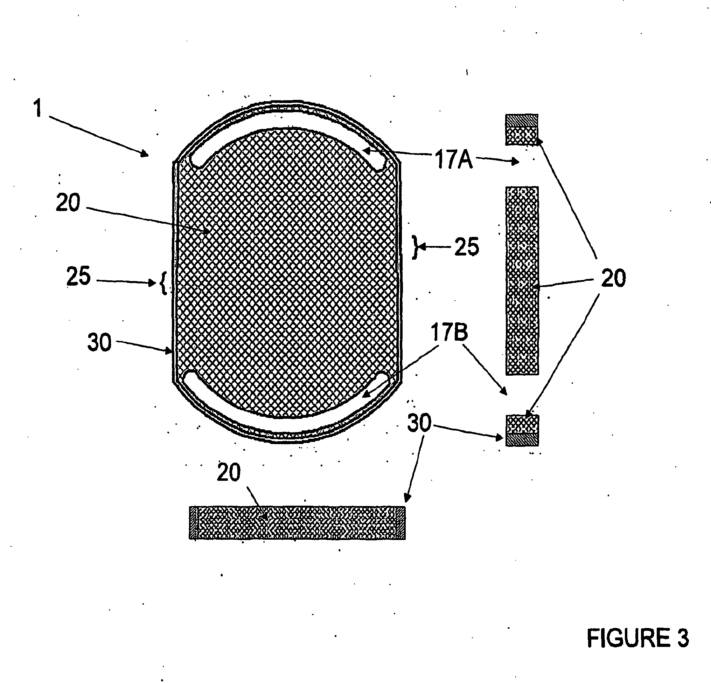

One example of a retentate screen 1 is shown in FIG 3. Three views are shown: a front view, a cross section viewed from side, and a cross section viewed from bottom. The retentate screen 1 includes a screen material 20, which is permeable to fluid, such as a gas or liquid. Two port-defining zones 17 are shown, which may be either open areas that lack any screen material or designated non-open areas in which screen material is present. More than two port-defining zones 17 may be present. For example, 3, 4, 5, 6, 7, 8, 9, 10, or more port-defining zones 17 may be present. Combinations of open areas and non-open areas are possible. For example, one port-defining zone 17 may be an open area lacking any screen material, and the other port-defining zone 17 may be a non-open area in which screen material is present. The port-defining zones 17 may be disposed anywhere in the retentate screen 1. The size of the port-defining zones 17 may be the same or different. In an embodiment in which (20.3 cm) (8 inch) diameter retentate screen is used, the port-defining zones 17 may have a cross sectional area of from about 0,645 cm² (0.1 in²) to about 161,3cm² (25 in²), preferably from about 6,45cm² (1 in²) to 32,26cm² (5 in²), 15,48cm² (2.4 in²) being presently contemplated.

A seal 30 is present around the outer perimeter of the retentate screen 1. In one embodiment, the seal 30 is not permeable to fluid. In another embodiment, the seal 30 is not permeable to liquid, but is permeable to gas. However, the seal 30 must be less permeable to feed, retentate and filtrate than is the screen material; and must be less permeable to filtrate than is the membrane 5. The seal 30 extends through the thickness of the retentate screen 1, such that one or more of fluid, liquid, or gas cannot pass from the screen material 20 through the outer perimeter.

The seal 30 for the retentate screen 1 may be made from a polymer, for example; silicone, polyurethane, polyethylene, polystyrene, nylon, rubber, fluoropolymer, thermoplastic, thermoset, and the like, or any combination thereof. The seal 30 may be flexible or inflexible. The seal 30 may be chemically and/or biologically resistant. The seal 30 may be adhered to the outer perimeter of the retentate screen 1 using an adhesive or physical connection, or it may be integral with the screen material 20 that forms the outer perimeter. In one embodiment, the seal 30 is a silicone or polyurethane polymer. The seal 30 may extend above and below the surface of the retentate screen 1, or it may be coplanar with the surface of the retentate screen 1.

The present inventors have found that the seal 30 of the retentate screen 1 desirably reduces or eliminates the amount of contaminants that can leach therefrom into the feed; retentate and/or filtrate. Thus, one advantage over conventional systems is obtained.

The retentate screen 1 may have any shape or profile. For example, it may be generally flat, pillow shaped, or curved. When viewed from the front it may be circular, oval, square, triangular, rectangular, or any combination thereof. In the embodiment shown in FIG 3, the retentate screen is generally circular shaped in which two straight edges 25 are present.

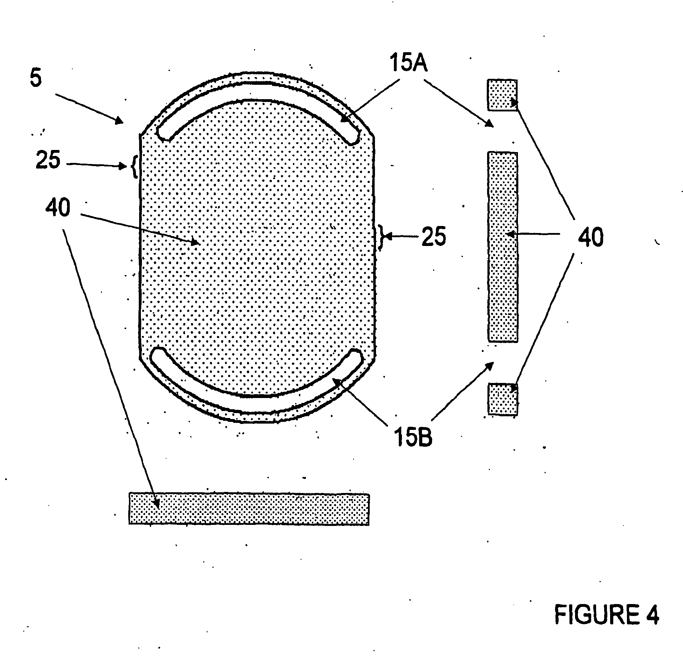

One example of a membrane 5 is shown in FIG 4. Three views are shown: a front view, a cross section viewed from side, and a cross section viewed from bottom. The membrane 5 includes a membrane material 40, which is semi-permeable to fluid, such as a gas or liquid, or anything contained therein for which the membrane material 40 is designed to pass through. Two openings 15A, 15B are shown, which pass completely through the cross sectional thickness of the membrane 5. More than two openings 15 may be present. For example, 3, 4, 5, 6, 7, 8, 9, 10, or more openings 15 may be present. The openings 15 may disposed anywhere in the membrane material 40.

The membrane 5 may be made of conventional filtering materials of the type normally associated with tangential flow filtration and depending upon the type of filtration desired. For example, the membrane 5 may be selected according to the components desired to be retained. The membrane 5 may be suitably selected for one or more of microfiltration, virus filtration, high-performance filtration, ultrafiltration, nanofiltration, reverse osmosis filtration, diafiltration, concentration, and the like, or any combination of these. The membrane 5 may be suitably selected to retain one or more of intact cells, cellular debris, viruses, proteins, antibiotics, sugars, salts, ions, macromolecules, monomers, oligomers, and the like, or any combination thereof. The membrane 5 may be suitably selected to allow one or more components to be passed into the filtrate such as colloidal material, viruses, proteins, salts, ions, small peptides, monomers, oligomers, water, solvent, and the like, or any combination thereof. The membrane 5 may be suitably selected to have any cutoff range between 9 µm and 0.01 kD. This range includes any value or subrange therebetween, including 9, 5, 1, 0.9, 0.5, 0.2, 0.1, 0.09, 0.05, 0.01 µm, 1000, 700, 500, 300, 200, 100, 50, 25, 10, 5, 1, 0.5, 0.1 kD, and any combination thereof Other suitable cutoff ranges for membrane 5 include 0.05 - 1 µm, 100 kD - 0.05 µm, 10 kD - 300 kD, 1 kD -1000 kD, and < 1 kD. The membrane 5 may be made from a material such as polyethersulfone, regenerated cellulose, nylon, Teflon, polypropylene, polycarbonate, polyvinylidene fluoride, polyester, cellulose acetate, or any other material that can selectively allow passage of components. Combinations of membranes 5 having differing filtering capacities may be suitably used.

The membrane 5 may have any shape or profile. For example, it may be generally flat or curved. When viewed from the front it may be circular, oval, square, triangular, rectangular, or any combination thereof. In the embodiment shown in FIG 4, the membrane 5 is generally circular shaped in which two straight edges 25 are formed. The membrane 5 may have a shape and size to match that of the retentate screen 1, such that their respective outer perimeters are the same or substantially the same. The openings 15 in the membrane 5 may also have the same shape, size, and location in the membrane 5 such that they align with the port-defining zones 17 of the retentate screen 1.

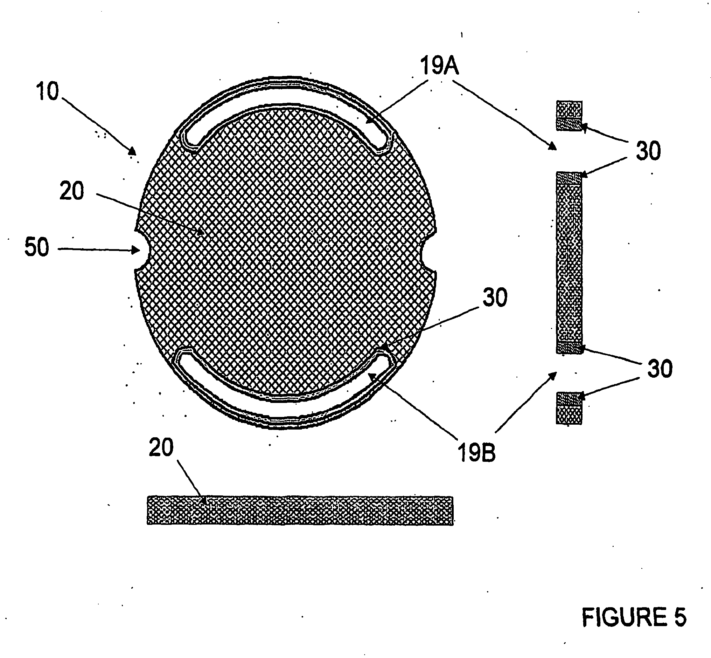

One example of a filtrate screen 10 is shown in FIG 5. Three views are shown: a front view, a cross section viewed from side, and a cross section viewed from bottom. The filtrate screen 10 includes a screen material 20, which is permeable to fluid, such as a gas or liquid. Two port-defining zones 19A, 19B are shown, which may be either open areas that lack any screen material or designated non-open areas in which screen material is present. More than two port-defining zones 19 may be present. For example, 3, 4, 5, 6, 7, 8, 9, 10, or more port-defining zones 19 may be present. Combinations of open areas and non-open areas are possible. For example, one port-defining zone 19 may be an open area lacking any screen material, and the other port-defining zone 19 may be a non-open area in which screen material is present. The port-defining zones 19 may be disposed anywhere in the filtrate screen 10.

A seal 30 is present around the perimeters of the port-defining zones 19 of the filtrate screen 10. In one embodiment, the seal 30 is not permeable to fluid. In another embodiment, the seal 30 is not permeable to liquid, but is permeable to gas. The seal 30 extends through the thickness of the filtrate screen 10, such that one or more of fluid, liquid, or gas cannot pass from the screen material 20 through the perimeter into the port-defining zone 19.

The seal 30 for the filtrate screen 10 may be made from a polymer, for example, silicone, polyurethane, polyethylene, polystyrene, nylon, rubber, fluoropolymer, thermoplastic, thermoset, and the like, or any combination thereof. The seal 30 may be flexible or inflexible. The seal 30 may be chemically and/or biologically resistant. The seal 30 may be adhered to the perimeter of the port-defining zones 19 using an adhesive or physical connection, or it may be integral with the screen material 20. In one embodiment, the seal 30 is a silicone or polyurethane polymer. The seal 30 may extend above and below the surface of the filtrate screen 10, or it may be coplanar with the surface of the filtrate screen 10.

The present inventors have found that the seal 30 of the filtrate screen 10 desirably reduces or eliminates the amount of contaminants that can leach therefrom into the feed, retentate and/or filtrate. Thus, an advantage over conventional systems is obtained.

The filtrate screen 10 may have any shape or profile. For example, it may be generally flat, pillow shaped, or curved. When viewed from the front it may be circular, oval, square, triangular, rectangular, or any combination thereof. In the embodiment shown in FIG 5, the filtrate screen 10 is generally circular shaped in which two cutouts 50 are present.

The permeable material of the retentate screen 1 and/or filtrate screen 10 may be woven, fibrous, spun or the like. It can be made of woven polypropylene or other woven or extruded meshes, such as polyester, polyamide, nylon, polyetheretherketone (PEEK), and Teflon-based materials such as ethylene tetrafluoroethylene (ETFE), or blends of any of these materials: Screens 1 and 10 can be die-cut or produced through other methods of manufacture, including machining, stamping, or molding. The use of die-cut screens may reduce material handling during manufacturing, and facilitate automated or robotic assembly.

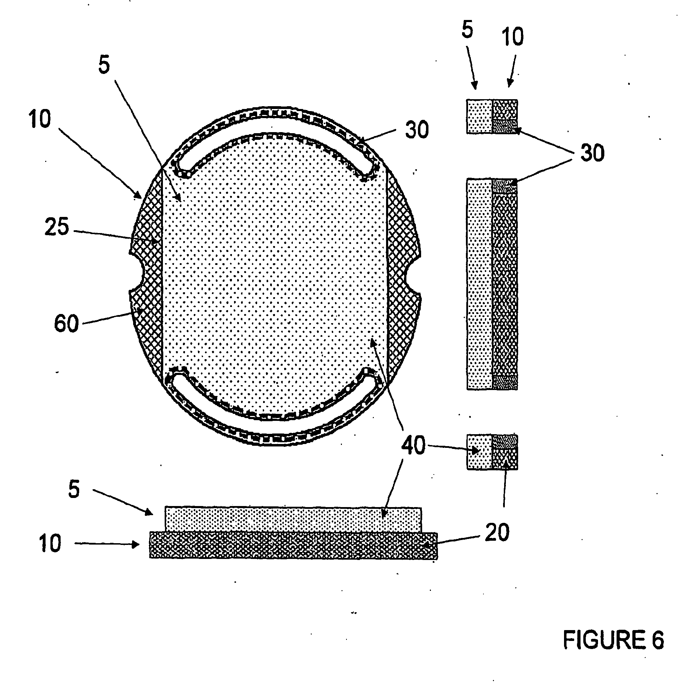

In one embodiment, the membrane 5 may have a shape and size to match that of the filtrate screen 10, such that their respective outer perimeters are the same or substantially the same. The openings 15 in the membrane 5 may also have the same shape, size, and location in the membrane 5 such that they align with the feed port-defining zone 19 of the filtrate screen 10. In another embodiment, the membrane 5 may have a size or shape that does not completely overlap that of the filtrate screen 10. For example, as shown in FIG 6, in which a front view, cross section viewed from side, and cross section viewed from bottom of one embodiment of a combination of a membrane 5 and filtrate screen 10 are shown in contact with one another, the membrane 5 includes one or more edges 25, which do not overlap with the outer perimeter of the filtrate screen 10. In this embodiment, the filtrate screen 10 has one or more protruding portions 60, which extend beyond the outer perimeter of the membrane 5 at edge 25.

In one embodiment, shown in FIG 6, the membrane 5 and filtrate screen 10 are axially aligned in stackwise fashion, and the openings 15 of the membrane 5 match the port-defining zones 19. In addition, the seals 30 at the perimeters of the port-defining zones 19 of the filtrate screen 10 provide a seal against the surface of the membrane 5 around the openings 15 of the membrane 5. The dashed line appearing about the perimeters of the openings 15 in the front view indicate where the seals 30 around the perimeters of the port-defining zones 19 in the filtrate screen 10 are in contact with the membrane 5.

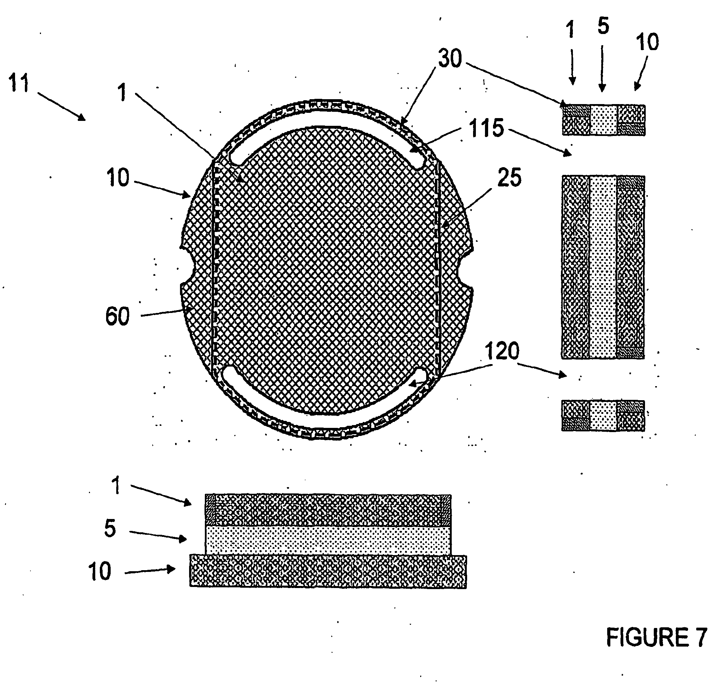

One example of a filter packet is shown in FIG 7. There, three views are shown: a front view, a cross sectional view from side, and a cross sectional view from bottom. In this embodiment, the retentate screen 1, membrane 5, and filtrate screen 10 are axially aligned in stackwise fashion. The respective port-defining zones 17, 19 of the retentate and filtrate screens 1 and 10 are aligned with the openings 15 in the membrane 5, which is disposed between the screens 1 and 10. In this embodiment, one set of port-defining zones 17A, 19A of the retentate 1 and filtrate 10 screens cooperate with an opening 15A in the membrane 5 to form a feed port 115. The other set of port-defining zones 17B, 19B of the retentate 1 and filtrate 10 screens cooperate with the other opening 15B in the membrane 5 to form a retentate port 120.

The feed port 115 and retentate port 120 are in fluid communication with the retentate screen 1 and the side of the membrane 5 that contacts the retentate screen 1. Because of the seals 30 around the perimeters of the port-defining zones 19 in the filtrate screen 10, however, the feed port 115 and the retentate port 120 are not in fluid communication with the screen material 20 of the filtrate screen 10. Moreover, because of the seals 30 around the perimeter of the retentate screen 1, the feed port 115 and retentate port 120 are not in fluid communication with an area of the device outside the perimeter of the retentate screen 1. The dashed line in FIG 7 shows where the seals 30 around the perimeter of the retentate screen contact the membrane 5.

Also referring to FIG 7, one embodiment is shown in which the filtrate screen 10 has one or more protruding portions 60, which extend beyond part of the respective outer perimeters of the retentate screen 1 and membrane 5 at edge 25. Cutouts 50 are also visible in the protruding portions 60 in the filtrate screen 10. In one embodiment, the cutouts 50 cooperate with the interior side of the shell wall 80 of the pressure shell 70 to form a filtrate collection area 110. Where the cutouts 50 and side of the shell wall 80 of the pressure shell 70 define a recognizable channel, filtrate collection area 110 may be referred to as a filtrate port or channel. In one embodiment, the filtrate screen 10 is in fluid communication with the filtrate collection area 110 through the protruding portions 60. In another embodiment, the filtrate screen 10 does not contain protruding portions 60, but is nevertheless in fluid contact with the filtrate collection area 110 through the unsealed perimeter of the filtrate screen 10.

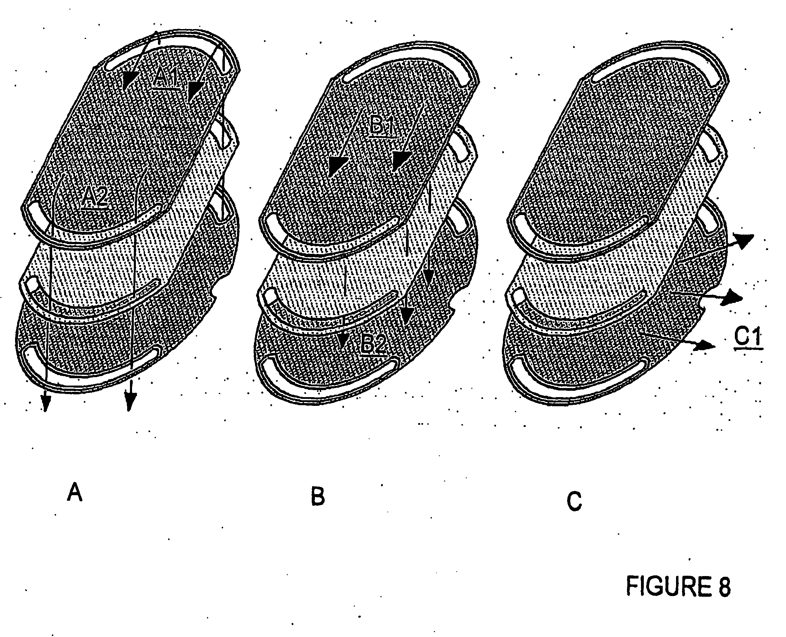

FIG 8 illustrates one embodiment of the flow direction in the filter packet 11. In part A of the figure, the arrows A1 illustrate one embodiment of a flow of feed material through the feed port 115. The arrows A2 in part A of the figure illustrate one embodiment of the flow direction of the retentate material through the retentate port 120. In part B of the figure, the arrows B1 illustrate one embodiment of the flow of feed material/retentate material through the retentate screen 1 and across the first side of membrane 5 that is in fluid communication with retentate screen 1. Thus, a tangential flow across the surface of the first side of membrane 5 is achieved. In part B of the figure, the arrows B2 illustrate one embodiment of the flow of filtrate material through membrane 5 and into the filtrate screen 10. In part C of the figure, the arrows C1 illustrate one embodiment of the flow of filtrate material through the filtrate screen 10. In one embodiment, the flow of feed / retentate material illustrated by arrows B1 through the retentate screen 1 is normal to the flow of filtrate material illustrated by arrows C1 through the filtrate screen 10. In one embodiment, the flow of feed / retentate material illustrated by arrows B1 across the first side of membrane 5 (in fluid communication with the retentate screen 1) is normal to the flow of filtrate material illustrated by arrows C1 across the second side, or backside, of membrane 5 (in fluid communication with the filtrate screen 10). In other embodiments, the flow of filtrate material illustrated by arrows C1 across the second side of membrane 5 or through the filtrate screen 10 is radial or only partially normal to the flow illustrated by arrows B1. The angle of flows between arrows C1 and B1 can range from 1 to 360 degrees, limited only by the size, number and placement of the feed and retentate ports.

Because the outer perimeter of the filtrate screen 10 is not sealed with a seal 30, the filtrate material can freely flow out of the filtrate screen 10. The retentate material, being sealed within the retentate port 120 by the cooperation of seals 30 around the perimeter of port-defining zone 19B of the filtrate screen 10 and the associated openings 15B in the membrane 5, is isolated from the filtrate material. The feed material is similarly isolated by seals 30 around port-defining zone 19A within feed port 115.

The present inventors have found that the feed 115 and retentate 120 ports, seals 30, retentate screen 1 and filtrate screen 10 desirably impart improved flow, efficiency or both. Thus, another advantage over conventional systems is obtained.

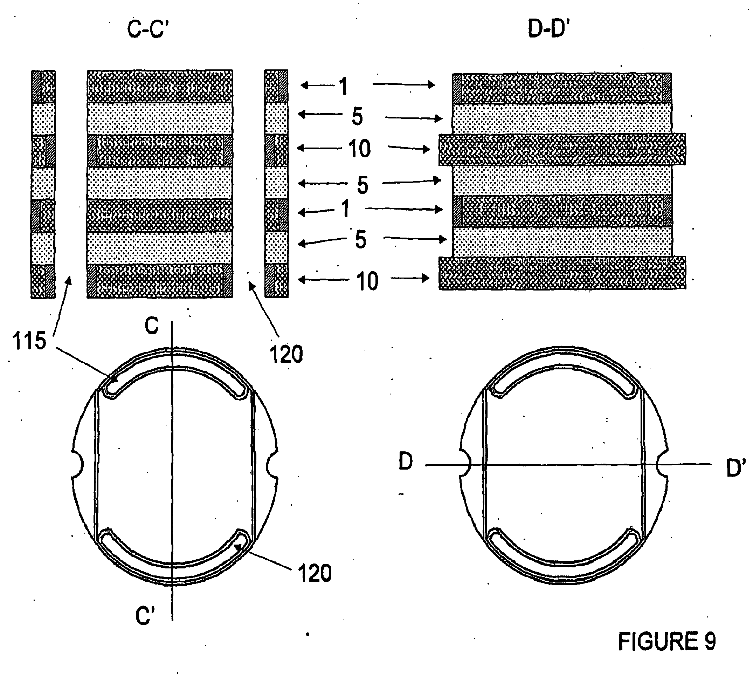

In one embodiment, shown in FIG 9, a plurality of filter packets 11 are shown, which are separated by second membranes 5. In this embodiment, a plurality of retentate screens 1, membranes 5 (first and second - the first within the filter packet 11, and the second between neighboring filter packets 11), and filtrate screens 10 are shown. Cross sections C-C' and D-D' show the respective feed port 115 and retentate port 120 and the protruding portions 60 of the filtrate screen 10. Any number of filter packets 11 may be included in a filter stack, each being separated from the adjacent packet by a second membrane. For some applications, it may be desirable to include tens to thousands of such filter packets. By way of example, a filter stack may include from 1 to about 100,000 filter packets, preferably from about 10 to 10,000 filter packets, and more preferably from about 25 to 1,000 filter packets. It is presently contemplated that about 500 filter packets may be used in a system having 8 (20.3 cm) (8 inch) diameter membranes to provide (about 9.3 m²) (about 100 ft²) of membrane. As the number of filter packets is increased, the filtering surface area (membrane area) increases commensurately.

The alternating layers of filter packets 11 and second membranes 5 may be housed within a pressure shell 70, an example of which is shown in FIG 10. The pressure shell 70 may be made of any material, including stainless steel, glass, polymeric material, such as polypropylene, nylon or other engineering plastics, or any combination thereof, which is capable of withstanding increased internal pressure. For example, the pressure shell 70 can withstand pressures ranging from about 1 to 200 psi. This range includes all values and subranges therebetween, including 6,9,34,5, 68,9, 103, 138, 207, 276, 345, 414, 483, 552, 621, 689, 758, 827, 965 1103, 1379 kpa about 1, 5, 10, 15, 20, 30, 40, 50, 60, 70, 80, 90, 100, 110, 120, 140, 160, and 200 psi) The pressure shell 70 may be suitably chemically and/or biologically resistant, and is suitable for pharmaceutical grade or other sterile processing. In one embodiment, the pressure shell 70 is capable of withstanding increased temperatures during processing. For example, the pressure shell 70 can withstand temperatures ranging from about 5 to 120°C. This range includes all values and subranges therebetween, including about 5,10,15,20, 25,30, 40, 50, 60, 70, 80, 90, 100, 110, and 120°C. The pressure shell 70 may be opaque, translucent, or transparent. It may be suitably gamma sterilized, or it may be steam or autoclave sterilized as appropriate. It is also possible for the pressure shell to made of materials or in increased thicknesses that are capable of withstanding higher pressures and/or temperatures.

In one embodiment, the pressure shell 70 is made of polysulfone. In one embodiment, the pressure shell 70 is specifically adapted to be disposable.

In one embodiment, such as shown in FIG 10, the pressure shell 70 is comprised of a shell wall 80 and endcaps 75 at either end of the shell wall 80. The pressure shell 70 may contain one or more openings and/or ports to accommodate the flow of feed material, retentate material, and filtrate material into and out of the pressure shell 70. The pressure shell 70 may include other ports or openings to accommodate, for example, temperature probes, pressure gauges, and the like. In the embodiment shown in FIG 10, a feed port opening 85, retentate port opening 90, and filtrate port openings 100 are shown schematically. These port openings cooperate with the various feed ports 115, retentate ports 120, and filtrate ports 110 to accommodate the flow of feed, retentate, and filtrate materials into and out of the device.

The endcaps 75 of pressure shell 70 can be connected to the shell wall 80 using adhesive, thermal weld, RF bond, compression fitting, exterior clamp, and the like, or any combination thereof. The filtration device may be specifically adapted for disposal after use.

The size of the pressure shell 70 may be suitably scaled up or down as needed. In one embodiment, in which the pressure shell 70 has a cylindrical configuration, one or more of the height or diameter can be adjusted. In one embodiment, the diameter of the pressure shell 70 can accommodate filter packets 11 having diameters ranging from about I to 24 inches. This range includes all values and subranges therebetween, including diameters of 2,5,5,1, 7,6, 10,2, 12,7, 15,2, 17,8, 20,3, 22,9, 25,4, 30,5, 35,6, 40,6, 45,7, 50,8 and 610 cm (about 1, 2, 3, 4, 5, 6, 7, 8, 9, 10, 12, 14, 16, 18, 20, and 24 inches).

The height of the pressure shell 70 can be suitably varied to accommodate as many alternating layers of filter packets 11 and second membranes 5 as appropriate. For many applications, membrane areas may suitably range from about 0.01 to 100 m² (0,1 to 1000 ft²) or more. This range includes all values and subranges therebetween, including 0.0093, 0,046, 0,093, 0,46, 0,93, 1,39, 2,32, 4,65, 6,97, 9,29, 23,2, 46,5, 69,7, 92,9m² (0.1, 0.5,1,5, 10, 15, 25, 50, 75, 100, 250, 500, 750, 1000 ft²), and any combination thereof.

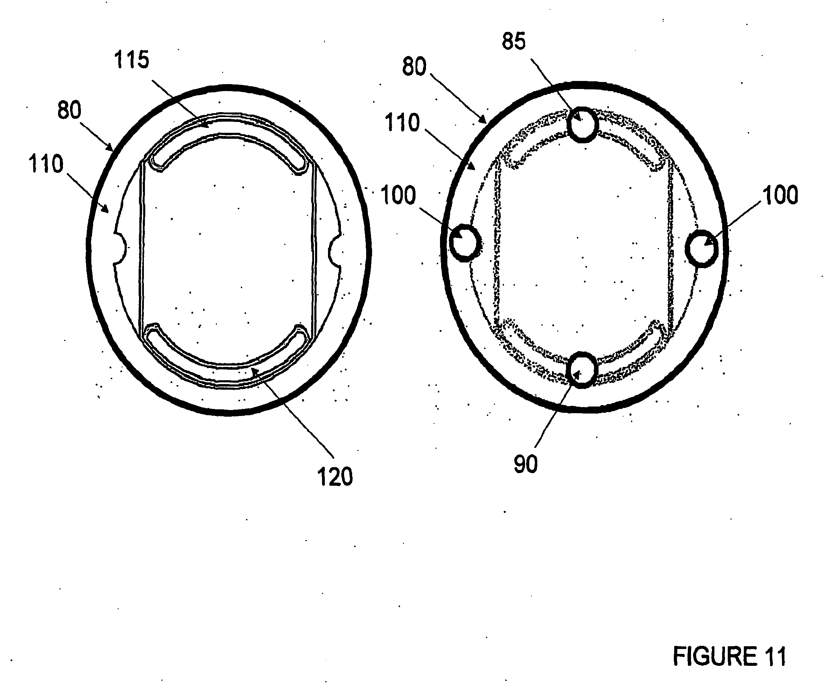

The pressure shell 70 can have any shape. For example, it may be box-like or may have a cylindrical shape. In one embodiment, the pressure shell 70 has a cylindrical shape, such as viewed end-on in FIG 11. Bach view in FIG 11 is taken along the axial line of a stackwise arrangement of filter packets, such as line AL in FIG 2. The left-hand representation in FIG 11 illustrates one embodiment of a pressure shell 70 with a filter packet 11 therein. Feed port 115 and retentate port 120 are shown. The filtrate port 110 appears as an open area between the interior of shell wall 80 and the perimeter of the filtrate screen 10. In one embodiment, the filtrate port 110 is in fluid communication with only a portion of the interior of the shell wall 80. In another embodiment, the filtrate port 110 is in fluid communication with only a portion of the interior of the shell wall 80.

The arrangement of alternating layers of filter packets 11 and second membranes 5 can terminate at either end, along axial line AL, for example, with any of retentate screen 1, membrane 5 (first or second), filtrate screen 10 as appropriate. In one embodiment, the terminating ends of the stack of filter packets 11 are in contact with the interior walls of the endcaps 75, for example. In one embodiment, the endcaps 75 apply a compressive force to the filter packets 11 and second membranes 5, for example, in opposing directions along axial line AL.

The right-hand view in FIG 11 illustrates one embodiment of the pressure shell 70, having a cylindrical shape, viewed end-on through one of the endcaps 75. The shaded part of the figure represents one embodiment of the orientation of the filter packets 11 relative to the feed port opening 85, the retentate port opening 90, and filtrate port openings 100.

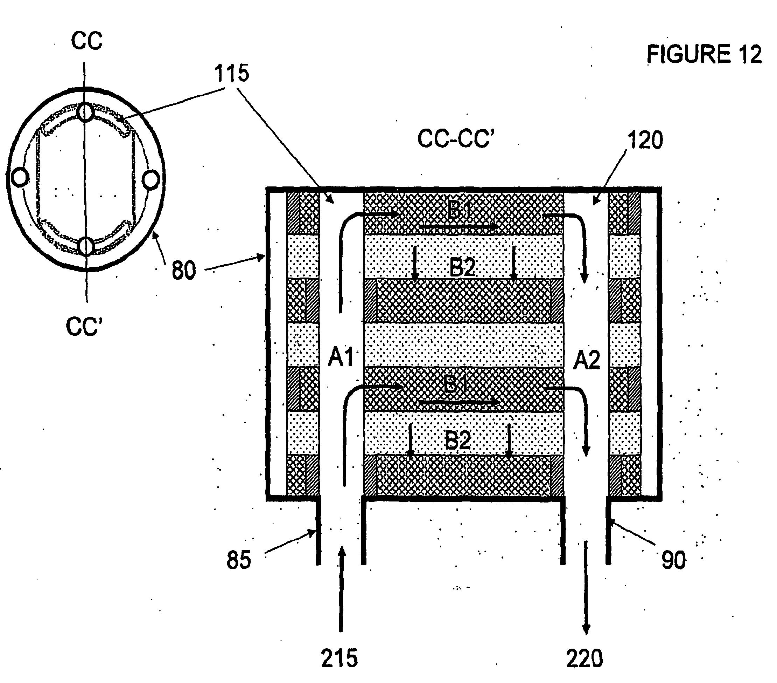

FIG 12 illustrates schematically the flow direction within one embodiment of the device. The cross sectional view along line CC-CC' is shown, which can be related to that of line C-C' in FIG 9. Similarly, the arrows depicted in FIG 12 can be related to those of FIG 8.

In FIG 12, feed 215 enters the device through the feed port opening 85 and into feed port 115. The arrows A1 illustrate one embodiment of a flow of feed material through the feed port 115 and into the retentate screen 1. The arrows B1 illustrate one embodiments of the flow of feed material/retentate material through the retentate screen 1 and across the first side of membrane 5 that is in fluid communication with retentate screen 1. The arrows A2 illustrate one embodiment of the flow direction of the retentate material through the retentate port 120 and out of retentate port opening 90 as retentate 220. Thus, a tangential flow across the surface of the first side of membrane 5 is achieved. The arrows B2 illustrate one embodiment of the flow of filtrate material through membrane 5 and into the filtrate screen 10.

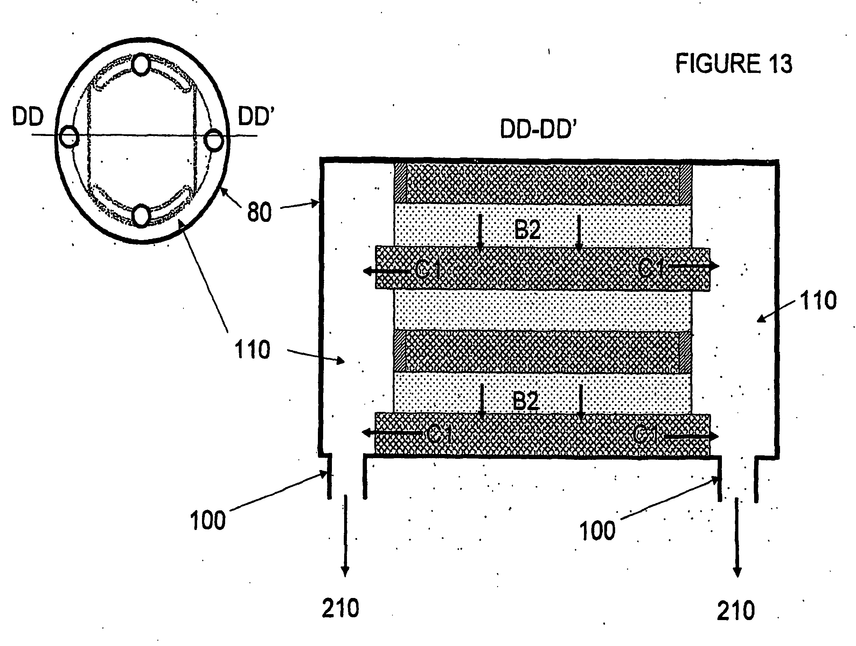

Referring now to FIG 13, wherein the cross sectional view along line DD-DD' is shown, which can be related to that of line D-D' in FIG 9. Similarly, the arrows depicted in FIG 13 can be related to those of FIG 8. The respective views along sections CC-CC' and DD-DD' in FIGS 12 and 13 are normal to one another. The arrows B2 illustrate one embodiment of the flow of filtrate material through the membrane 5 and into the filtrate screen 10. The arrows C1 illustrate one embodiment of the flow of filtrate material through the filtrate screen 10, into the filtrate port 110, and out through filtrate port openings 100 as filtrate 210.

For many applications, operational flow rates for the feed may be from about 0,11 liter per minute per m² of membrane ("(L/min)/m²) to 106L/min/m² (0.01 liter per minute per ft² of membrane ("(L/min)/ft²") to 10 (L/min)/ft²). It is presently contemplated that for a 9.29m² (100 ft²) system, the flow rate may be from about 1 L/min to 1000 L/min, preferably from about 10 L/min to 100 L/min, and more preferably from about 50 L/min to 70 L/min. However, in the event that the device is constructed with a serial path (described below), the feed flow rate may be decreased for the same membrane area. As an example, a device that flows feed over two membranes before returning it as retentate may have a flow rate from about 1 L/min to 700 L/min, preferably from about 7 L/min to 70 L/min, and more preferably from about 30 L/min to 50 L/min. It is contemplated that the operating pressure on the feed side can be less than (about 830 kPa) (about 120 psi) preferably less than about 415 kPa (about 60psi) and more preferably less than about about 140-350 kPa (about 20.50psi)

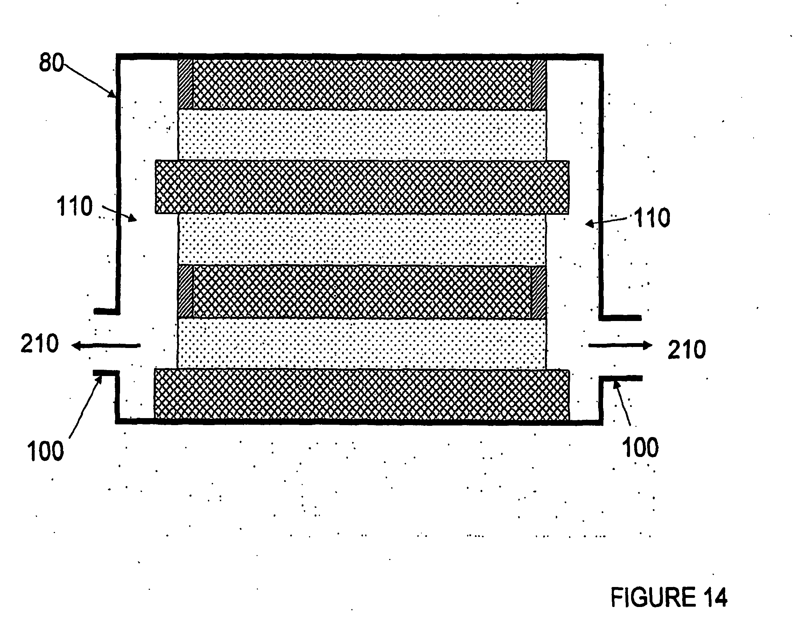

So long as they are in fluid communication with their respective filtrate ports 110, feed ports 115, and retentate ports 120, the filtrate port openings 100, feed port openings 85, and retentate port openings 90 can be disposed anywhere throughout the device. For example, one embodiment of the location of the filtrate port openings 100 is shown in FIG 14, which carry the filtrate from the filtrate port 110 out through the side of the device, for example, through the shell wall 80, or, if an endcap 75 is present, through the side portion of the endcap 75.

In one embodiment, the height and/or diameter of the pressure shell 70 is changed to accommodate different numbers or sizes of filter packets 11, second membranes 5, and the like, different membrane areas, or both. In this embodiment, the sizes and shapes of any one or more of the ports 110, 115, and 120, and/or any one or more of the port openings 85, 90, and 100, and/or any one or more of the port flarings 87 and 97, can be suitably adjusted to accommodate higher or lower flow rates as required.

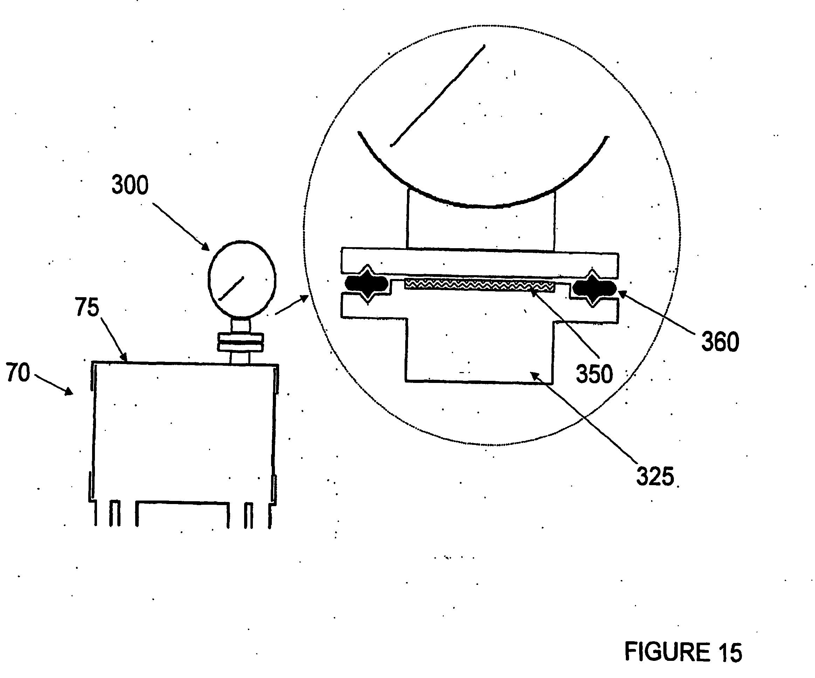

As noted previously, the pressure shell 70 can accommodate one or more additional ports or openings. One example of these is shown in FIG 15. In this embodiment, a gauge 300, is mounted to the endcap 75 using a sanitary flange 325 having a barrier 350 disposed between the contents of the filtration device and the gauge 300. A gasket 360 may be optionally present in the sanitary flange 325.

In one embodiment, the barrier 350 creates a hermetic seal between the contents of a filtration device and a conventional sanitary pressure gauge, such as that illustrated by gauge 300. The barrier 350 may form an integral part of the filtration device, and may be specifically designed to be disposed of after use. The gauge 300 may be removed and re-used without the need for cleaning or sterilizing.

The barrier 350 may be constructed of any thin, pliable polymeric film. For example, it may be constructed of a material such as polyethylene or latex rubber. The barrier 350 may be secured around its perimeter to prevent the contents of the filtration device from escaping, or to prevent the introduction of foreign matter into the filtration device. The gauge 300 may be attached, for example, to the filtration device using a conventional sanitary tri-clover clamp. The pressure within the filtration device may be read through the barrier 350 using the gauge 300. Direct contact between the contents of the device and the gauge 300 is thus avoided.

Additional sanitary flanges 325 with a barrier 350 may be disposed on or in association with the pressure shell 70. For example, it may be desirable to have a sanitary flange 325 in communication with each of the feed port, retentate port and filtrate collection area. Such sanitary flanges can be disposed in the endcap in pressure communication with each, or at or near the port openings of each, described below.

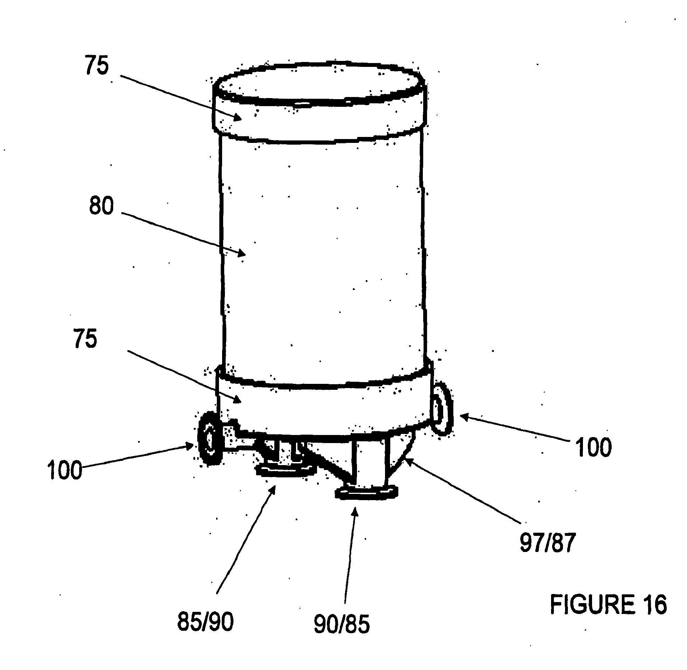

FIGS 16-19 show perspective drawings of several embodiments of the invention. FIG 16 shows a perspective drawing of one embodiment in which a device having a cylindrical configuration is illustrated. Endcaps 75, shell wall 80, filtrate port openings 100 are shown. The bottom port openings 85/90 and 90/85 can function as respective feed port openings 85 or retentate port openings 90 depending on the orientation of the filter packet 11 (not shown) within the pressure shell 70. In this embodiment, the respective feed port opening 85 is shown, which opens up or flares as it enters the endcap 75. In one embodiment, this feed port flaring 87 has an interior cross sectional shape and size that suitably matches that of the feed port 115 f the filter packet 11. Similarly, the retentate port opening 90 opens up or flares at it meets the endcap 75, to form a retentate port flaring 97, which in one embodiment has an interior cross sectional shape and size to match that of the retentate port 120.

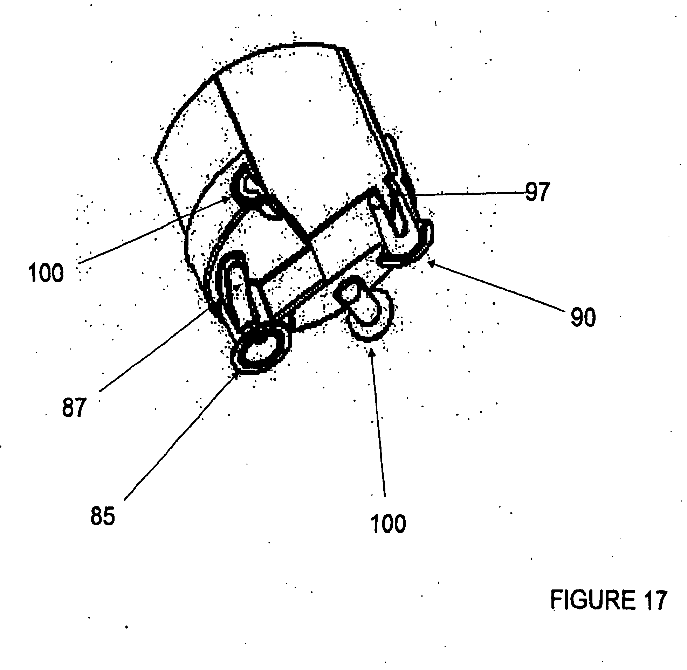

FIG 17 shows a perspective partial cut away drawing of the embodiment in FIG 16, in which one embodiment of the feed port flaring 87 and retentate port flaring 97 are shown.

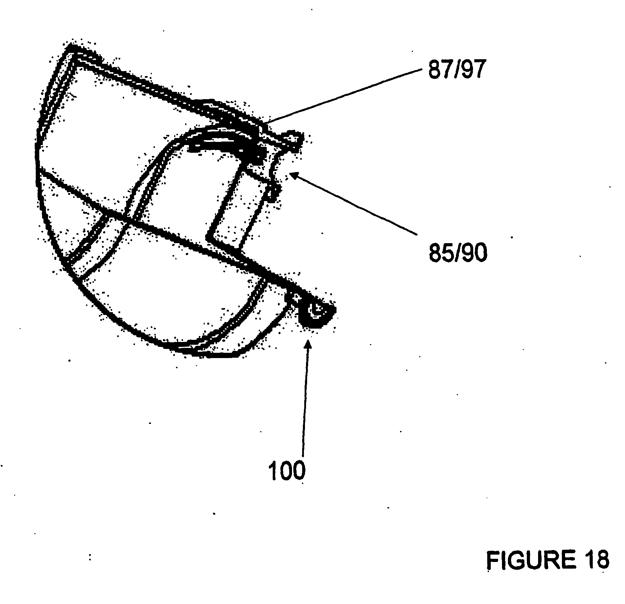

FIG 18 shows another perspective partial cut away drawing of the embodiment in FIG 16. The interior of the port openings 85/90 and flarings 87/97 are shown.

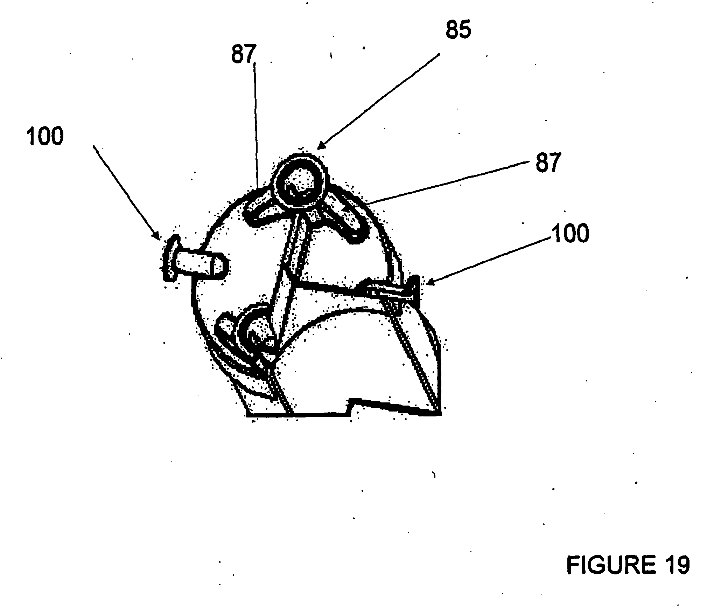

FIG 19 shows another perspective partial cut away drawing of the embodiment in FIG 16. The filtrate port openings 100, feed port openings 85, and retentate port openings 90 may be in the form of flanges, which can accommodate gaskets as appropriate, for connection with other piping or plumbing. Alternatively, the openings can be adapted to accommodate tubular fittings, such as TYGON ® or other sterile tubing.

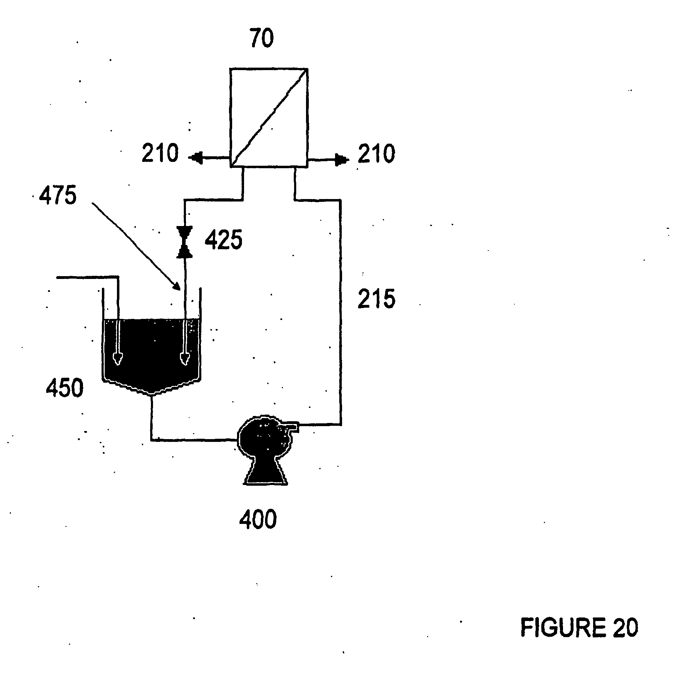

The filtration device can be suitably included in a system, one embodiment of which is illustrated schematically in FIG 20. There, the filtration device having pressure shell 70 is shown. A pump 400, for example a peristaltic pump, is shown, which pumps feed 215 from feed tank 450 into the pressure shell 70. The filtrate 210 exits the pressure shell 70, while the retentate 220 is returned to the feed tank through a valve 425 and retentate return 475. Alternatively, the retentate can flow to a separate retentate tank. Those skilled in the art will recognize further alternative system configurations in which the filtration device can be used.

In accordance with one embodiment of the invention, the filtration devices can be used alone or in any combination. They may be used in series, in parallel, or any combination thereof. Alternatively, a filtration device having two or more filter packets may be designed with internal serial or parallel paths.

According to an embodiment with an internal serial path, a barrier may be inserted within the pressure shell 70, dividing the filter stack into a first and second set of filter packets. The retentate port of the first set can be placed in fluid communication with the feed port of the second set, thereby creating a flow path across at least two membranes. By adding additional barriers within the filter stack and fluid communications in serial fashion between the retentate port of each isolated set of filter packets to the feed port of the next, flow paths across at least three or more membranes can be achieved. In such embodiments, the feed port 115 of the first set of isolated membranes is in direct communication with the feed port opening 85, and the retentate port 120 of the last set of isolated membranes is in direct communication with the retentate port opening 90. A filtration device having an internal serial path may reduce the volume per membrane area of fluid and the pumping pressure required for operating the system.

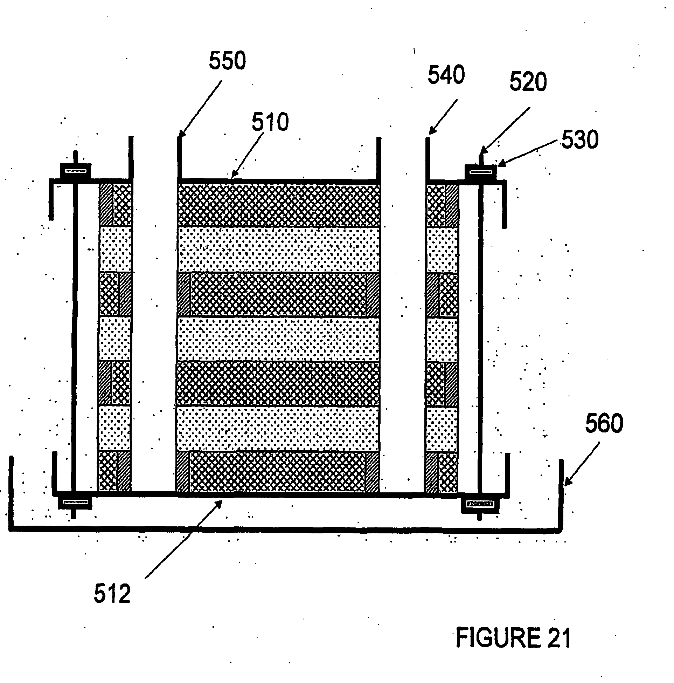

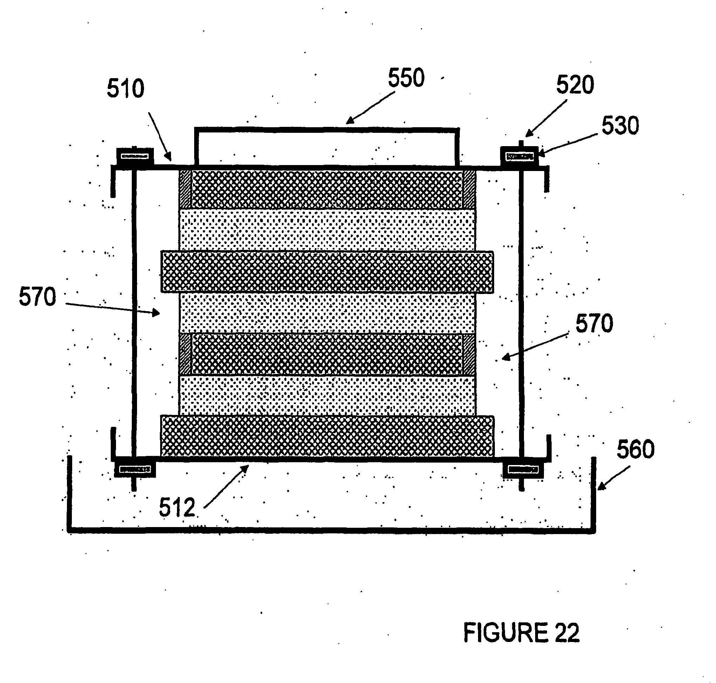

FIGS 21 and 22 show an embodiment of the invention in which an open filter packet is provided. Such a configuration may be especially suitable when sanitary or sterile conditions are not required. The open configuration can use any of the filter packets described above, those similar to FIG 9 being shown. Thus, the open device can include one or more filter packets, each including a retentate screen 1, a membrane 5 and a filtrate screen 10. Where the device has two or more filter packets, each is separated by a second membrane 5. The open device can further include a retainer for holding the filter packets together. The retainer can, for example, be a pair of endplates 510, 512 fastened together by rods 520. The rods 520 can be threaded at one or both ends to accept nuts 530. The nuts 530 can be tightened as appropriate to achieve any desired compression within the filter packets. One or both endplates can be provided with a feed port opening 540 and a retentate port opening 550.

The filter packets and retainer can be disposed in or above a vessel, such as a tub 560, for receiving filtrate. In operation, filtrate flows through the feed port 540 into the retentate screens 1. Material that does not pass through the membrane 5 instead passes into the retentate port 550, while material that can pass through the membrane 5 can flow into the filtrate screen 10. Material in the filtrate screen 10 is free to flow into the filtrate collection area 570, which in the open device can be atmosphere, air, oxygen, nitrogen, argon, inert atmosphere or the like, or a combination thereof. From there, material can be collected in the vessel 560.

Embodiments of the invention can also be used in direct-flow or normal-flow filtration applications, which differ from cross-flow filtration in that the feed flow is generally directed toward and through the membrane, not tangentially across it. Particles that do not pass through the membrane accumulate within the membrane or at the membrane surface, while the filtrate passes through to the filtrate side.

The embodiments described above can be used in direct-flow applications by capping off or otherwise obstructing the retentate port 120. Alternatively, the retentate screen 1 can be constructed without a retentate port-defining zone 17B, the membrane 5 without a second opening 19B, and/or the filtrate screen without a retentate port-defining zone 19B. An embodiment adapted for direct-flow filtration may be especially suitable for virus removal or applications requiring positively or negatively charged membranes.

When used in direct-flow applications, the retentate port 120 can be absent, capped or otherwise obstructed. Feed passing into the retentate screen 1 can flow toward and through the membrane to become filtrate. Those particles that do not pass through the membrane accumulate within the membrane 5, at the membrane surface in fluid communication with the retentate screen 1, or within the retentate screen 1. The filtrate that has passed through the membrane 5 to the filtrate screen 10 is free to flow to the outer perimeter of the filtrate screen 10 as shown by arrows C1 in FIG 8C, and into the filtrate collection area 110, 570 as shown in FIGS 7, 13, 14 or 22.

One embodiment of the invention relates to a filtration device comprising a pressure shell 70 having a shell wall 80 and at least one filter packet 11 inside the pressure shell 70. The filter packet 11 comprises a membrane 5 having a first side and a second side, and first and second openings 15A, 15B therethrough. The filter packet 11 further comprises a retentate screen 1 in fluid communication with the first side of the membrane 5. The retentate screen 1 comprises a permeable material 20 and a seal 30 around an outer perimeter of the permeable material 20, the permeable material 20 having a feed port-defining zone 17A in fluid communication with the first opening 15A and a retentate port-defining zone 17B in fluid communication with the second opening 15B. The filter packet 11 further comprises a filtrate screen 10 in fluid communication with the second side of the membrane 5. The filtrate screen 10 comprises a permeable material 20 with a feed port-defining zone 19A in fluid communication with the first opening 15A and a retentate port-defining zone 19B in fluid communication with the second opening 15B. Each of the feed port-defining and retentate port-defining zones 19 of the filtrate screen 10 comprise a seal 30 around a perimeter thereof. The filtrate screen 10 is in fluid communication with at least a portion of the interior of shell wall 80.

In one embodiment, the feed port-defining zone 17A and retentate port-defining zone 17B in the retentate screen 1 each comprise an opening in the permeable material 20.

In one embodiment, the feed port-defining zone 17A and retentate port-defining zone 17B of the retentate screen 1 are substantially the same size and shape as the first and second openings 15A, 15B, respectively.

In one embodiment, the feed port-defining zone 19A and retentate port-defining zone 19B in the filtrate screen 10 each comprise an opening in the permeable material 20.

In one embodiment, the feed port-defining zone 19A and retentate port-defining zone 19B of the filtrate screen 10 are substantially the same size and shape as the first and second openings 15A, 15B, respectively.

In one embodiment, the feed port-defining zones 19A, 17A of the filtrate and retentate screens 10 and 1 are axially aligned with the first opening 15A in the membrane 5 to define a feed port 115, and the retentate port-defining zones 17B, 19B of the filtrate and retentate screens 10 and 1 are axially aligned with the second opening 15B in the membrane 5 to define a retentate port 120.

In one embodiment, the feed port 115, retentate screen 1, and retentate port 120 are in fluid communication with one another on the first side of the membrane 5.

In one embodiment, the seals 30 substantially prevent the feed port 115, retentate screen 1, and retentate port 120 from being in fluid communication with the filtrate screen 10 and the portion of the interior of shell wall 80 except through the membrane 5.

In one embodiment, the pressure shell 70 further comprises a feed port opening 85 in fluid communication with the feed port-defining zones 19A, 17A of the filtrate and retentate screens 10 and 1.

In one embodiment, the pressure shell 70 further comprises a retentate port opening 90 in fluid communication with the retentate port-defining zones 19B, 17B of the filtrate and retentate screens 10 and 1.

In one embodiment, the pressure shell 70 further comprises a filtrate port opening 100 in fluid communication with the interior of shell wall 80.

In one embodiment, the invention further comprises a second membrane 5 having one side thereof in fluid communication with the retentate screen 1 or the filtrate screen 10.

In one embodiment, the invention further comprises a plurality of filter packets 11 and second membranes 5 arranged stackwise with alternating layers of filter packets 11 and second membranes 5.

In one embodiment, the pressure shell 70 is constructed of polymeric material.

In one embodiment, the device is gamma-sterilized.

In one embodiment, the invention relates to a filtration device comprising at least one filter packet 11 and a retainer holding the at least one filter packet 11 together. The filter packet 11 comprises a membrane 5 having a first side and a second side, and first and second openings 15A, 15B therethrough. The filter packet 11 further comprises a retentate screen 1 in fluid communication with the first side of the membrane 5. The retentate screen 1 comprises a permeable material 20 and a seal 30 around an outer perimeter of the permeable material 20. The permeable material 20 has a feed port-defining zone 17A in fluid communication with the first opening 15A and a retentate port-defining zone 17B in fluid communication with the second opening 15B. The filter packet 11 further comprises a filtrate screen 10 in fluid communication with the second side of the membrane 5. The filtrate screen 10 comprises a permeable material 20 with a sealed feed port-defining zone 19A in fluid communication with the first opening 15A and a sealed retentate port-defining zone 19B in fluid communication with the second opening 15B. The filtrate screen 10 has a perimeter open to a filtrate collection area.

In one embodiment, the device further comprises a vessel 560 adapted to receive a filtrate from the filtrate collection area.

In one embodiment, the vessel 560 is open.

In one embodiment, the at least one filter packet 11 is disposed above or within the vessel 560.

In one embodiment, the vessel 560 is closed.

In one embodiment, the retainer is a pressure shell 70.

In one embodiment, the at least one filter packet 11 is disposed within the pressure shell 70.

In one embodiment, the vessel 560 is in fluid communication with a pressure shell 70 in which the at least one filter packet 11 is disposed.

In one embodiment, the at least one filter packet 11 comprises a plurality of filter packets 11 separated by second membranes 5 arranged stackwise with alternating layers of filter packets 11 and second membranes 5.

In one embodiment, the invention relates to a filtration device comprising at least one filter packet 11 and a retainer holding the at least one filter packet 11 together. The filter packet 11 comprises a membrane 5 having a first side and a second side, and a first opening 15A therethrough. The filter packet 11 further comprises a retentate screen 1 in fluid communication with the first side of the membrane 5. The retentate screen 1 comprises a permeable material 20 and a seal 30 around an outer perimeter of the permeable material 20. The permeable material 20 has a feed port-defining zone 17A in fluid communication with the first opening 15A. The filter packet 11 further comprises a filtrate screen 10 in fluid communication with the second side of the membrane 5. The filtrate screen 10 comprises a permeable material 20 with a feed port-defining zone 19A in fluid communication with the first opening 15A. The feed port-defining zone 19A of the filtrate screen includes a seal 30 around a perimeter thereof. The filtrate screen 10 has a perimeter open to a filtrate collection area.

In one embodiment, the device also includes a vessel adapted to receive a filtrate from the filtrate collection area.

In one embodiment, the retainer is a pressure shell.

In one embodiment, the at least one filter packet is disposed within the pressure shell.

In one embodiment, the at least one filter packet comprises a plurality of filter packets separated by second membranes arranged stackwise with alternating layers of filter packets and second membranes.

The invention also relates to methods comprising contacting a feed fluid with any of the devices described herein, and concentrating a retentate within the feed fluid.

In one such embodiment, the retentate is recycled into the feed fluid.

In another such embodiment, the retentate is not recycled into the feed fluid.

The invention also relates to a filtration device comprising a pressure shell 70, at least one filter packet 11 housed within the pressure shell 70 and a sanitary flange 325 in pressure communication with an interior of the pressure shell 70. The sanitary flange 325 has an integral barrier 350 and is adapted to receive a non-integral pressure gauge 300.

In one embodiment, the integral barrier 350 is impervious to contamination.

In one embodiment, the sanitary flange 325 is disposed on an endcap 75 of the pressure shell 70.

In one embodiment, the sanitary flange 325 is disposed at a port of the pressure shell 70.

The invention also relates to a method for making a filtration device, comprising contacting the membrane 5 with retentate screen 1 and with filtrate screen 10.

Although specific features of certain embodiments are shown in some drawings and not others, this is for convenience only, as some feature may be combined with any or all of the other features in accordance with the invention.

## Claims

1. A tangential flow filtration device, comprising:
a pressure shell (70) having a shell wall (80); and
at least one filter packet (11) inside the pressure shell (70) and comprising
a membrane (5) having a first side and a second side, and first and second openings therethrough (15A, 15B),
a retentate screen (1) in fluid communication with the first side of the membrane (5), the retentate screen (1) comprising a permeable material (20) and a seal (30) around an outer perimeter of the permeable material (20), the permeable material (20) having a feed port-defining zone (17A) in fluid communication with the first opening (15A) and a retentate port-defining zone (17B) in fluid communication with the second opening (15B),
a filtrate screen (10) in fluid communication with the second side of the membrane, **characterised in that** the filtrate screen comprising a permeable material (20) with a feed port-defining zone (19A) in fluid communication with the first opening (15A) and a retentate port-defining zone (19B) in fluid communication with the second opening (15B), each of the feed port-defining (19A) and retentate port-defining (19B) zones of the filtrate screen comprising a seal (30) around a perimeter thereof, the filtrate screen (10) has a perimeter open to a filtrate collection area.

2. The device of claim 1 wherein, the feed port-defining zone (17A) and retentate port-defining zone (17B) in the retentate screen (1) each comprise an opening in the permeable material (20).

3. The device of claim 1 wherein, the feed port-defining zone (17A) and retentate port-defining zone (17B) of the retentate screen (1) are the same size and shape as the first and second openings (15A, 15B), respectively.

4. The device of claim 1 wherein, the feed port-defining zone (19A) and retentate port-defining zone (19B) in the filtrate screen (10) each comprise an opening in the permeable material (20).

5. The device of claim 1 wherein, the feed port-defining zone (19A) and retentate port-defining zone (19B) of the filtrate screen (10) are the same size and shape as the first and second openings (15A, 15B), respectively.

6. The device of claim 1 wherein, the feed port-defining zones of the filtrate and retentate screens (19A, 17A) are axially aligned with the first opening (15A) in the membrane (5) to define a feed port (115), and the retentate port-defining zones of the filtrate and retentate screens (19B, 17B) are axially aligned with the second opening (15B) in the membrane (5) to define a retentate port (120).

7. The device of claim 6 wherein, the feed port (115), retentate screen (1), and retentate port (120) are in fluid communication with one another on the first side of the membrane (5).

8. The device of claim 1 wherein, the seals (30) prevent the feed port (115), retentate screen (1), and retentate port (120) from being in fluid communication with the filtrate screen (10) and the portion of the interior of the shell wall (80) except through the membrane (5).

9. The device of claim 1 wherein, the pressure shell (70) further comprises a feed port opening (85) in fluid communication with the feed port-defining zones (17A, 17B) of the filtrate (10) and retentate (1) screens.

10. The device of claim 1, which is gamma-sterilized.

11. The device of claims 1 to 10 further comprising
a retainer holding the at least one filter packet (11) together,
a vessel (560) adapted to receive a filtrate form the filtrate collection area (110).

12. The device of claim 11 wherein, the vessel (560) is open or closed.

13. The device of claim 12 wherein, the at least one filter packet (11) is disposed above or within the vessel (560).

14. The device of claim 11 wherein, the vessel (560) is in fluid communication with a pressure shell (70) in which the at least one filter packet (11) is disposed.

15. The device of claims 1 to 14, wherein the filtrate screen (10) is in fluid communication with at least a portion of an interior of the shell wall (80).

## Patentansprüche

1. Tangentialdurchfluss-Filtrationsvorrichtung, die Folgendes umfasst:
eine Druckhülle (70), die eine Hüllenwand (80) hat, und
wenigstens ein Filterpaket (11) innerhalb der Druckhülle (70) und das Folgendes umfasst:
eine Membran (5), die eine erste Seite und eine zweite Seite und eine erste und eine zweite Öffnung (15A, 15B) durch dieselbe hat,
ein Retentatsieb (1) in Fluidverbindung mit der ersten Seite der Membran (5), wobei das Retentatsieb (1) einen durchlässigen Werkstoff (20) und eine Dichtung (30) um einen Außendurchmesser des durchlässigen Werkstoffs (20) umfasst, wobei der durchlässige Werkstoff (20) eine Speiseanschluss-Definitionszone (17A) in Fluidverbindung mit der ersten Öffnung (15A) und eine Retentatanschluss-Definitionszone (17B) in Fluidverbindung mit der zweiten Öffnung (15B) hat,
ein Filtratsieb (10) in Fluidverbindung mit der zweiten Seite der Membran, **dadurch gekennzeichnet, dass** das Filtratsieb einen durchlässigen Werkstoff (20) mit einer Speiseanschluss-Definitionszone (19A) in Fluidverbindung mit der ersten Öffnung (15A) und einer Retentatanschluss-Definitionszone (19B) in Fluidverbindung mit der zweiten Öffnung (15B) hat, wobei sowohl die Speiseanschluss-Definitionszone (19A) als auch die Retentatanschluss-Definitionszone (19B) des Filtratsiebs eine Dichtung (30) um einen Umfang derselben umfassen, wobei das Filtratsieb (10) einen zu einem Filtratsammelbereich offenen Umfang hat.

2. Vorrichtung nach Anspruch 1, wobei die Speiseanschluss-Definitionszone (17A) und die Retentatanschluss-Definitionszone (17B) in dem Retentatsieb (1) jeweils eine Öffnung in dem durchlässigen Werkstoff (20) umfassen.

3. Vorrichtung nach Anspruch 1, wobei die Speiseanschluss-Definitionszone (17A) und die Retentatanschluss-Definitionszone (17B) des Retentatsiebs (1) die gleiche Größe und Form haben wie die erste bzw. die zweite Öffnung (15A, 15B).

4. Vorrichtung nach Anspruch 1, wobei die Speiseanschluss-Definitionszone (19A) und die Retentatanschluss-Definitionszone (19B) in dem Filtratsieb (10) jeweils eine Öffnung in dem durchlässigen Werkstoff (20) umfassen.

5. Vorrichtung nach Anspruch 1, wobei die Speiseanschluss-Definitionszone (19A) und die Retentatanschluss-Definitionszone (19B) des Filtratsiebs (10) die gleiche Größe und Form haben wie die erste bzw. die zweite Öffnung (15A, 15B).

6. Vorrichtung nach Anspruch 1, wobei die Speiseanschluss-Definitionszonen (19A, 17A) des Filtrat- und des Retentatsiebs in Axialrichtung mit der ersten Öffnung (15A) in der Membran (5) ausgerichtet sind, um einen Speiseanschluss (115) zu definieren, und die Retentatanschluss-Definitionszonen (19B, 17B) des Filtrat- und des Retentatsiebs in Axialrichtung mit der zweiten Öffnung (15B) in der Membran (5) ausgerichtet sind, um einen Retentatanschluss (120) zu definieren.

7. Vorrichtung nach Anspruch 6, wobei der Speiseanschluss (115), das Retentatsieb (1) und der Retentatanschluss (120) auf der ersten Seite der Membran (5) in Fluidverbindung miteinander stehen.

8. Vorrichtung nach Anspruch 1, wobei die Dichtungen (30) verhindern, dass der Speiseanschluss (115), das Retentatsieb (1) und der Retentatanschluss (120) außer durch die Membran (5) in Fluidverbindung mit dem Filtratsieb (10) und dem Abschnitt des Inneren der Hüllenwand (80) stehen.

9. Vorrichtung nach Anspruch 1, wobei die Druckhülle (70) ferner eine Speiseanschlussöffnung (85) in Fluidverbindung mit den Speiseanschluss-Definitionszonen (17A, 17B) des Filtrat- (10) und des Retentatsiebs (1) umfasst.

10. Vorrichtung nach Anspruch 1, die gamma-sterilisiert ist.

11. Vorrichtung nach Anspruch 1 bis 10, die ferner Folgendes umfasst:
einen Halter, der das wenigstens eine Filterpaket (11) zusammenhält,
einen Behälter (560), der dafür eingerichtet ist, ein Filtrat aus dem Filtratsammelbereich (110) aufzunehmen.

12. Vorrichtung nach Anspruch 11, wobei der Behälter (560) offen oder geschlossen ist.

13. Vorrichtung nach Anspruch 12, wobei das wenigstens eine Filterpaket (11) oberhalb oder innerhalb des Behälters (560) angeordnet ist.

14. Vorrichtung nach Anspruch 11, wobei der Behälter (560) in Fluidverbindung mit einer Druckhülle (70) steht, in der das wenigstens eine Filterpaket (11) angeordnet ist.

15. Vorrichtung nach Anspruch 1 bis 14, wobei das Filtratsieb (10) in Fluidverbindung mit wenigstens einem Abschnitt eines Inneren der Hüllenwand (80) steht.

## Revendications

1. Dispositif de filtration à écoulement tangentiel, comprenant:
une coque de pression (70) présentant une paroi de coque (80) ; et
au moins un paquet formant filtre (11) à l'intérieur de la coque de pression (70) et comprenant
une membrane (5) présentant une première face et une deuxième face, ainsi qu'une première et une deuxième ouverture (15A, 15B) les traversant,
un tamis de rétentat (1) en communication fluidique avec la première face de la membrane (5), le tamis de rétentat (1) comprenant un matériau perméable (20) ainsi que un joint (30) autour d'un périmètre externe du matériau perméable (20), le matériau perméable (20) présentant une zone définissant un orifice d'alimentation (17A) en communication fluidique avec la première ouverture (15A) et une zone définissant un orifice de rétentat (17B) en communication fluidique avec la deuxième ouverture (15B),
un tamis de filtrat (10) en communication fluidique avec la deuxième face de la membrane, **caractérisé en ce que** le tamis de filtrat comprenant un matériau perméable (20) avec une zone définissant un orifice d'alimentation (19A) en communication fluidique avec la première ouverture (15A) et une zone définissant un orifice de rétentat (19B) en communication fluidique avec la deuxième ouverture (15B), chacune parmi la zone définissant l'orifice d'alimentation (19A) et la zone définissant l'orifice de rétentat (19B) du tamis de filtrat comprenant un joint (30) autour du périmètre de celle-ci, le tamis de filtrat (10) présentant un périmètre qui est ouvert sur une zone de collecte de filtrat.

2. Le dispositif selon la revendication 1, dans lequel la zone de définition d'orifice d'alimentation (17A) ainsi que la zone de définition d'orifice de rétentat (17B) au sein du tamis de rétentat (1) comprennent chacune une ouverture dans le matériau perméable (20).

3. Le dispositif selon la revendication 1 dans lequel la zone définissant l'orifice d'alimentation (17A) ainsi que la zone de définition de l'orifice de rétentat (17B) du tamis de rétentat (1) sont de la même taille et la même forme que la première et la deuxième ouverture (15A, 15B), respectivement.

4. Le dispositif selon la revendication 1, dans lequel la zone de définition d'orifice d'alimentation (19A) ainsi que la zone de définition de l'orifice de rétentat (19B) au sein du tamis de filtrat (10) comprennent chacune une ouverture dans le matériau perméable (20).

5. Le dispositif selon la revendication 1 dans lequel la zone définissant l'orifice d'alimentation (19A) ainsi que la zone de définition de l'orifice de rétentat (19B) du tamis de filtrat (10) sont de la même taille et la même forme que la première et la deuxième ouverture (15A, 15B), respectivement.

6. Le dispositif selon la revendication 1, dans lequel les zones de définition de l'orifice d'alimentation des tamis de filtrat et de rétentat (19A, 17A) sont alignés axialement avec la première ouverture (15A) dans la membrane (5) afin de définir un orifice d'alimentation (115), et les zones de définition d'orifice de rétentat des tamis de filtrat et de rétentat (19B, 17B) sont alignés axialement avec la deuxième ouverture (15B) dans la membrane (5) afin de définir une orifice de rétentat (120).

7. Le dispositif selon la revendication 6 dans lequel l'orifice d'alimentation (115), le tamis de rétentat (1), ainsi que l'orifice de rétentat (120) sont en communication fluidique l'un avec l'autre au niveau de la première face de la membrane (5).

8. Le dispositif selon la revendication 1, dans lequel les joints (30) empêchent la communication fluidique entre d'une part l'orifice d'alimentation (115), le tamis de rétentat (1) et l'orifice de rétentat (120) et, d'autre part, le tamis de filtrat (10) et la partie de l'intérieur de la paroi de coque (80) sauf à travers la membrane (5).

9. Le dispositif selon la revendication 1, dans lequel la coque de pression (70) comprend en outre une ouverture formant orifice d'alimentation (85) en communication fluidique avec les zones de définition d'orifice d'alimentation (17A, 17B) des tamis de filtrat (10) et de rétentat (1).

10. Le dispositif selon la revendication 1, qui est stérilisé au rayons gamma.

11. Le dispositif selon la revendication 1 à 10, comprenant en outre :
un organe de retenue qui maintient ensemble le au moins un paquet formant filtre (11),
un récipient (560) adaptée pour recevoir un filtrat à partir de la zone de collecte de filtrat (110).

12. Le dispositif selon la revendication 11, dans lequel le récipient (560) est ouvert ou fermé.

13. Le dispositif selon la revendication 12, dans lequel le au moins un paquet formant filtre (11) est disposé au-dessus du récipient (560) ou à l'intérieur de celui-ci.

14. Le dispositif selon la revendication 11, dans lequel le récipient (560) est en communication fluidique avec une coque de pression (70) dans laquelle est disposé le au moins un paquet formant filtre (11).

15. Le dispositif selon les revendications 1 à 14, dans lequel le tamis de filtrat (10) est en communication fluidique avec au moins une partie de l'intérieur de la paroi de coque (80).
